# FASCICULE DE BREVET EUROPEEN

(11) **EP 4 347 282 B1**
(45) Date de publication et mention de la délivrance du brevet: **02.07.2025**
(21) Numéro de dépôt: 22730268.4
(22) Date de dépôt: 24.05.2022
(51) Int. Cl.: B60G 3/14, B60G 7/02, B60G 21/05

(54) **TRAIN ARRIERE POUR VEHICULE AUTOMOBILE DU TYPE A DEUX BRAS TIRES LONGITUDINAUX A COMPORTEMENT ELASTIQUE AMELIORE**
HINTERACHSE FÜR EIN KRAFTFAHRZEUG MIT ZWEI HINTEREN LÄNGSLENKERN MIT VERBESSERTEM ELASTISCHEM VERHALTEN
REAR AXLE FOR A MOTOR VEHICLE, OF THE TYPE WITH TWO LONGITUDINAL TRAILING ARMS HAVING IMPROVED ELASTIC BEHAVIOUR

(30) Priorité: 04.06.2021 FR 2105880
(43) Date de publication de la demande: 10.04.2024
(73) Titulaire: Renault s.a.s, 92100 Boulogne Billancourt (FR)
(72) Inventeur: DUFFAU, Benjamin, 78084 GUYANCOURT CEDEX (FR); MILLON, Jean-Pierre, 78084 GUYANCOURT CEDEX (FR); ROLLET, Remi, 91190 Gif (FR)
(86) Numéro de dépôt international: PCT/EP2022/064075
(87) Numéro de publication internationale: WO 2022/253640

(56) Documents cités:
- DE-A1- 4 021 157
- FR-A1- 2 296 541

## Description

L'invention a pour objet un train arrière pour véhicule automobile du type à deux bras tirés longitudinaux, en particulier un train arrière à comportement élastique amélioré, et notamment à braquage induit sous-vireur augmenté.

On connaît depuis de nombreuses années des trains arrière de véhicule automobile à deux bras tirés reliés chacun à la caisse du véhicule par deux articulations élastiques, les extrémités des bras tirés opposées à celles articulées à la caisse recevant les roues arrière du véhicule. Les roues de ce type de train arrière sont donc indépendantes.

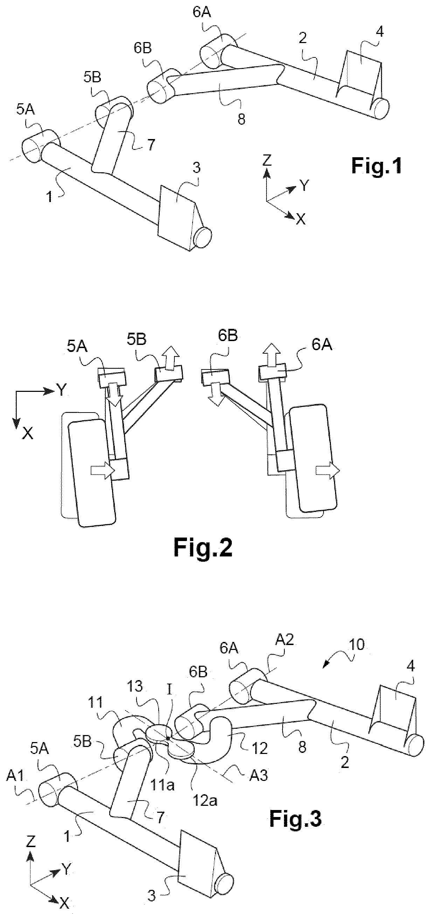

Ce type de train arrière est représenté figure 1. Chacun des deux bras tirés 1, 2 présente un support de fusée 3, 4 à son extrémité arrière et est relié à la caisse par deux articulations élastiques d'axe sensiblement transversal, l'une 5A, 6A des articulations élastiques étant située à l'extrémité avant du bras tiré 1, 2, l'autre articulation élastique 5B, 6B étant située à l'extrémité avant d'un bras oblique 7, 8 solidaire du bras tiré 1, 2 respectivement, les articulations élastiques 5B, 6B étant situées entre les articulations 5A, 6A transversalement. Dans ce type de train arrière, les axes des articulations 5A, 5B d'une part et 6A, 6B d'autre part, se coupent dans le plan longitudinal et vertical médian (transversalement) du véhicule. Ces axes peuvent être transversaux ou former un angle non nul par rapport à la direction transversale du véhicule. En outre, les articulations 5B, 6B sont généralement situées au dessus des articulations 5A, 6A verticalement et en arrière de ces articulations suivant l'axe longitudinal du véhicule. La figure 2 représente le comportement de ce type de train arrière lors d'un virage à droite : on constate que, sous effort transversal, les articulations 5B, 6B se déforment élastiquement, l'une étant décalée vers l'avant et l'autre vers arrière suivant la direction longitudinale, engendrant un comportement survireur, ce qui n'est pas souhaitable.

Afin de maintenir longitudinalement les articulations 5B, 6B lors d'une prise de virage, une solution connue consiste à faire pivoter les bras l'un par rapport à l'autre suivant une direction transversale notamment à l'aide d'une barre torsible. A cet effet, chaque extrémité avant d'un bras tiré est solidaire d'une barre transversale dirigée vers l'extrémité avant de l'autre bras tiré, les barres transversales étant montées pivotantes l'une par rapport à l'autre autour d'un axe transversal en une position médiane transversalement. Ce type de train arrière est néanmoins assez souple en son centre, car l'articulation centrale n'est pas reliée à la caisse. En outre, pour des raisons d'encombrement, il est difficile de modifier ce type de structure pour réaliser des braquages induits sous-vireurs significatifs. Le document DE 4021157A1 divulgue un train arrière de véhicule connu, conforme au préambule de la revendication 1.

Il existe donc un besoin pour un train arrière à bras tirés du type précité présentant un comportement élastique amélioré et de préférence à braquage induit sous-vireur.

A cet effet, l'invention concerne un train arrière de véhicule automobile du type à deux bras tirés longitudinaux, dans lequel chaque bras tiré présente un support de fusée à une extrémité arrière, et à une extrémité avant opposée, un axe de rotation sensiblement transversal défini par une première articulation et une deuxième articulation destinées à être reliées à la caisse du véhicule. Les deuxièmes articulations sont situées entre les premières articulations transversalement et les axes de rotation des bras tirés sont sécants en un point d'intersection appartenant à un plan médian (transversalement) longitudinal et vertical du train arrière. Selon l'invention :
- l'un des bras tiré est solidaire, du côté de sa deuxième articulation, d'un premier élément de support s'étendant vers l'avant du train,
- l'autre bras tiré est solidaire, du côté de sa deuxième articulation, d'un deuxième élément de support s'étendant vers l'arrière du train,
- des extrémités libres des premier et deuxième éléments de support sont situées dans le plan médian longitudinal et vertical du train arrière et sont reliées entre elles, et maintenues à une distance fixe suivant une direction sensiblement longitudinale, par un élément de liaison monté pivotant autour d'au moins un axe transversal à au moins l'une des extrémités libres des premier et deuxième éléments de support.

Cette configuration permet une transmission longitudinale des efforts subis par les deuxièmes articulations. En outre, en maintenant à une distance fixe longitudinalement les deuxièmes articulations, lors d'un virage, les déplacements des deuxièmes articulations dans des directions opposées longitudinalement sont interdits par l'élément de liaison, améliorant le guidage des roues sous effort transversal et le comportement élastique du train arrière.

L'élément de liaison est monté pivotant autour d'au moins un axe transversal à au moins l'une des extrémités libres des premier et deuxième éléments de support ou aux deux extrémités libres, et peut être monté pivotant autour d'au moins un autre axe, par exemple autour d'un axe longitudinal et d'un axe vertical.

Avantageusement, la distance fixe séparant les extrémités libres des premier et deuxième éléments de support peut être comprise dans un intervalle allant de zéro à une valeur seuil. Cette valeur seuil pourra être déterminée par calcul en fonction du comportement souhaité du train arrière.

Avantageusement, l'élément de liaison peut s'étendre verticalement au dessus du point d'intersection des axes de rotation des bras tirés, notamment à une distance non nulle, inférieure ou égale à une valeur seuil, typiquement déterminée véhicule à vide lorsque le train arrière est monté sur le véhicule. Cette configuration présente l'avantage d'induire un braquage sous-vireur du train arrière. La valeur seuil pourra être déterminée en fonction des caractéristiques du train arrière et plus précisément des articulations.

L'élément de liaison est de préférence un élément de liaison mécanique, notamment dépourvu de composant hydraulique, simple à réaliser.

Dans un mode de réalisation, l'élément de liaison peut être une pièce allongée présentant deux extrémités distantes suivant la direction longitudinale, chacune de ces extrémités étant montée pivotante à l'une des extrémités libres des premier et deuxième éléments de support autour d'au moins un axe de rotation transversal. Dans ce mode de réalisation, la distance entre les extrémités libres des premier et deuxième éléments de support est donc non nulle. Cette distance sera avantageusement choisie la plus petite possible, la distance minimale peut par exemple être imposée par les dimensions des articulations, elles-mêmes dimensionnées en fonction des caractéristiques mécaniques du train arrière et/ou être imposée par des contraintes de montage.

Cette pièce allongée peut se présenter sous la forme d'une simple platine, généralement plane, typiquement en matériau métallique. L'épaisseur et/ou le matériau pourront notamment être choisis pour que la pièce résiste aux efforts longitudinaux exercés lors du déplacement du véhicule, notamment en virage.

Typiquement, la pièce allongée peut s'étendre dans un plan horizontal ou sensiblement horizontal, parallèle ou sensiblement parallèle à un plan horizontal contenant le point d'intersection des axes de rotation des bras tirés.

Les extrémités de la pièce allongée peuvent être articulées aux extrémités libres des premier et deuxième éléments de support par des articulations présentant au moins un axe de rotation transversal. On pourra notamment utiliser des articulations de type rotule.

Dans un autre mode de réalisation, l'élément de liaison peut être une articulation présentant au moins un axe de rotation transversal, avantageusement une articulation élastique.

Dans ce mode de réalisation, la distance entre les extrémités libres des premier et deuxième éléments de support est donc nulle.

Quelque soit le mode de réalisation, on pourra prévoir un système de fixation amovible, optionnellement réglable, notamment suivant la direction longitudinale, qui relie au moins un élément de support à l'élément de liaison, ceci afin de faciliter la réalisation et le montage des bras tirés.

Un système de fixation peut notamment comporter un premier élément de fixation solidaire d'un bras tiré à proximité de sa deuxième articulation ou d'un élément de support, un deuxième élément de fixation solidaire d'un élément d'ancrage de l'élément de liaison, les premier et deuxième éléments de fixation étant chacun percés de deux orifices correspondants recevant des fixations de type vis-écrou, optionnellement au moins un orifice présentant une dimension supérieure à l'orifice avec lequel il coopère, notamment dans une direction de réglage. Les premier et deuxième éléments de fixation peuvent notamment faire partie d'un élément de support et/ou former l'élément de support. L'élément d'ancrage de l'élément de liaison sera par exemple conformé pour recevoir une articulation de type rotule ou une articulation élastique.

Un système de fixation peut également comporter un premier élément de fixation solidaire d'un bras tiré à proximité de sa deuxième articulation ou d'un élément de support, un deuxième élément de fixation solidaire d'un élément d'ancrage de l'élément de liaison, le premier élément de fixation présentant un orifice fileté, le deuxième élément de fixation présentant une tige filetée s'étendant parallèlement à la direction longitudinale et coopérant avec l'orifice fileté. On pourra notamment solidariser l'élément d'ancrage à l'une des extrémités de la tige filetée. La tige filetée pourra être maintenue en position par un ou deux écrous, de préférence deux.

Chacune de ces deux variantes pourra être utilisée pour l'un ou les deux éléments de support. Avantageusement, le premier élément de fixation pourra être positionné par rapport à l'élément de support ou au bras tiré, en dehors d'une zone de montage d'une deuxième articulation et/ou d'usinage du bras tiré.

L'invention concerne enfin un véhicule équipé d'un train arrière selon l'invention.

L'invention est maintenant décrite en référence aux dessins annexés et aux exemples, non limitatifs, dans lesquels :
[Fig. 1] La figure 1 représente schématiquement en perspective un train arrière selon l'art antérieur.
[Fig. 2] La figure 2 représente schématiquement une vue de dessus du train arrière de la figure 1 en situation avant (roues droites) et après (roues inclinées) virage à droite.
[Fig. 3] La figure 3 représente schématiquement en perspective un train arrière selon un mode de réalisation de l'invention.
[Fig. 4] La figure 4 représente schématiquement une vue de dessus du train arrière de la figure 3 en situation avant (roues droites) et après (roues inclinées) virage à droite.
[Fig. 5] La figure 5 représente schématiquement une vue de dessus de l'élément de liaison selon un autre mode de réalisation.
[Fig. 6] La figure 6 représente une vue de dessus d'un système de fixation d'un élément de liaison selon un mode de réalisation.
[Fig. 7] La figure 7 représente une vue de dessus d'un système de fixation d'un élément de liaison selon un autre mode de réalisation.
[Fig. 8] La figure 8 représente une vue en perspective d'un système de fixation d'un élément de liaison selon un autre mode de réalisation.
[Fig. 9] La figure 9 représente une vue de dessus d'un système de fixation d'un élément de liaison selon un autre mode de réalisation.
[Fig. 10] La figure 10 représente schématiquement, vue suivant la direction transversale, la cinématique en roulis des articulations de la jumelle et des bras du train arrière de la figure 3.
[Fig. 11] La figure 11 représente schématiquement, vue suivant la direction transversale, la cinématique en roulis des articulations de la jumelle du train arrière de la figure 3.
[Fig. 12] La figure 12 représente schématiquement, vue suivant la direction transversale (schémas (a) et (b)) ou vue de dessus (schéma (c), la cinématique en pompage de l'articulation du train arrière de la figure 5.
[Fig. 13] La figure 13 représente schématiquement, vue suivant la direction transversale, la cinématique en roulis des articulations de la jumelle du train arrière de la figure 5.

Dans la présente description, les termes avant, arrière, supérieur, inférieur, font référence aux directions avant et arrière du véhicule ou du train arrière, lorsque celui-ci est monté sur le véhicule, autrement dit en position d'utilisation du train arrière. Les axes X, Y, Z, correspondent respectivement à l'axe longitudinal (d'avant en arrière), transversal et vertical du véhicule, ce dernier reposant sur le sol, ou du train arrière en position d'utilisation. La direction verticale correspond ainsi à la direction de la gravité.

Par sensiblement horizontal, longitudinal, transversal, ou vertical, on entend une direction/un plan formant un angle d'au plus ±20°, voire d'au plus ±10° ou d'au plus ±5°, avec une direction/un plan horizontal, longitudinal, transversal, ou vertical.

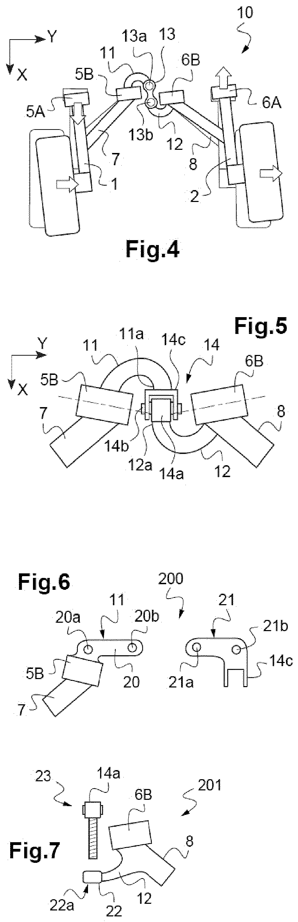

Les figures 3 et 4 représentent un train arrière 10 de véhicule automobile selon un mode de réalisation de l'invention. Ce train arrière 10 comprend deux bras tirés longitudinaux 1, 2. Chaque bras tiré 1, 2, présente à une extrémité arrière un support de fusée 3, 4. A une extrémité avant opposée, chaque bras tiré 1, 2 présente un axe de rotation A1, A2 sensiblement transversal défini par une première articulation 5A, 6A et une deuxième articulation 5B, 6B respectivement, destinées à être reliées à la caisse du véhicule. Les axes de rotation A1, A2 des bras tirés peuvent former chacun avec la direction transversale un angle allant de 0 à 15°. Lorsqu'ils forment un angle non nul avec la direction transversale, chacun des axes de rotation A1, A2 est alors incliné vers l'arrière du train arrière, tel que représenté sur les figures.

Les deuxièmes articulations 5B, 6B sont situées entre les premières articulations 5A, 6A transversalement.

Dans le mode de réalisation représenté, chaque deuxième articulation 5B, 6B est solidaire d'un bras oblique 7, 8 respectivement, chaque bras oblique s'étendant depuis l'un des bras tirés 1, 2 dont il est solidaire dans une direction oblique vers l'autre bras tiré et vers l'avant du train arrière. Chaque extrémité avant libre d'un bras oblique 7, 8 porte ainsi une deuxième articulation 5B, 6B respectivement. L'invention n'est toutefois pas limitée à une forme particulière des bras tirés, ceux-ci pouvant par exemple se présenter sous la forme d'une pièce massive, sans espace libre entre les bras obliques et le reste des bras tirés.

Typiquement, les deuxièmes articulations 5B, 6B sont situées au dessus des premières articulations 5A, 6A verticalement et éventuellement en arrière de celles-ci suivant l'axe longitudinal du véhicule.

Les premières et deuxièmes articulations sont en général des articulations élastiques, aussi appelées « bushing » ou « silent bloc ». Ce type d'articulation, bien connu, comprend typiquement deux tubes coaxiaux montés à rotation l'un par rapport à l'autre et séparés par un bloc de matériau polymère. Une articulation élastique est habituellement montée à l'intérieur d'une douille, le tube externe étant solidaire de cette douille. Sur les figures, seules les douilles recevant les articulations élastiques 5A, 6A, 5B, 6B et solidaires des bras tirés 1, 2 ou obliques 7, 8 sont visibles. Les tubes internes des articulations élastiques sont quant-à-eux solidaires de la caisse du véhicule.

Chacun des bras tirés 1, 2 peut ainsi pivoter autour d'un axe de rotation A1, A2 défini par les deux articulations 5A, 5B, respectivement 6A, 6B, qui le relient à la caisse du véhicule. Ces axes de rotation A1, A2 sont sécants en un point d'intersection I appartenant au plan médian longitudinal et vertical du train arrière. Ce plan est un plan médian transversalement du train arrière s'étendant suivant les directions longitudinale et verticale.

Selon l'invention, l'un des bras tirés 1, est solidaire du côté de sa deuxième articulation 5B d'un premier élément de support 11 s'étendant vers l'avant du train arrière et l'autre bras tiré 2, est solidaire du côté de sa deuxième articulation 6B d'un deuxième élément de support 12 s'étendant vers l'arrière du train. Ces éléments de support 11, 12 sont ici sous la forme d'un bras incurvé, l'invention n'est toutefois pas limitée par la forme des éléments de support. En outre, les extrémités libres 11a, 12a de ces premier et deuxième éléments de support 11, 12 sont situées dans le plan médian longitudinal et vertical du train arrière et sont reliées entre elles, et maintenues à une distance fixe suivant la direction longitudinale, par un élément de liaison 13, notamment apte à transmettre des efforts suivant une direction sensiblement longitudinale X.

Dans l'exemple représenté figures 3 et 4, cet élément de liaison 13 est une pièce allongée, aussi appelée jumelle, dont chaque extrémité est montée à rotation sur l'une des extrémités libres 11a, 12a des éléments de support 11, 12, via une articulation 13a, 13b. Chaque articulation 13a, 13b présente au moins un axe de rotation transversal. Dans l'exemple, cette jumelle 13 se présente sous la forme d'une simple platine plane, typiquement en acier ou en aluminium. L'axe A3 reliant les articulations 13a, 13b de la jumelle 13 s'étend en outre sensiblement parallèlement à la direction longitudinale du train arrière, dans le plan médian vertical et longitudinal du train arrière.

La distance, non nulle, séparant les articulations 13a, 13b pourra être choisie inférieure ou égale à une valeur seuil. Cette valeur seuil pourra être déterminée par calcul et correspondre par exemple à une valeur maximale de déformation acceptable par le train arrière. A titre d'exemple cette distance pourra être de 30 à 70 mm, de préférence de 35 à 60 ou dans tout intervalle défini par deux de ces limites. Cette distance sera de préférence la plus faible possible, une distance minimale étant contrainte par les dimensions des articulations 13a, 13b, par exemples des rotules et/ou par des contraintes de montage des deuxièmes articulations 5B, 6B, et/ou par des contraintes d'usinage des bras tirés.

Tel que représenté ici, les articulations 13a, 13b sont situées symétriquement de part et d'autre du point d'intersection I suivant la direction longitudinale. L'invention n'est toutefois pas limitée à cet agencement et une position asymétrique des articulations 13a, 13b est tout à fait envisageable.

Dans l'exemple représenté figures 3 et 4, l'axe A3 coupe les axes de rotation A1 et A2 des bras au point d'intersection I. En variante, cet axe A3 pourrait être situé au dessus verticalement du point I (toujours dans le plan médian vertical et longitudinal du train arrière), notamment à une distance non nulle, inférieure ou égale à une valeur seuil. Une telle position rehaussée de l'élément de liaison 13 permet d'améliorer le braquage induit sous-vireur, tel que montré dans les exemples. La valeur seuil pourra être déterminée par calcul en fonction de la course maximale longitudinale autorisée par les deuxièmes articulations 5B, 6B. A titre d'exemple, la position verticale de l'axe A3 de l'élément de liaison par rapport au point d'intersection I peut être de 0 à 35mm, avantageusement de 0 à 30 mm, de 5 à 25 mm ou de 10 à 20mm, ou dans tout intervalle défini par deux de ces limites.

Tel que montré par les flèches de la figure 4, la présence de l'élément de liaison 13 permet de contraindre longitudinalement la position relative des deuxièmes articulations 5B, 6B lors d'un virage à droite : les bras 1 et 2 et les roues qu'ils portent voient moins de variation de pince survireuse en comparaison avec la variation de pince observée figure 2 en l'absence d'élément de liaison.

Dans l'exemple représenté figure 5, les extrémités libres 11a, 12a des premiers et deuxième éléments de support 11, 12 sont reliées par une articulation 14, ici une articulation élastique, qui va permettre une transmission des efforts longitudinaux. Dans l'exemple, cette articulation élastique 14 est insérée à l'intérieur d'une douille 14a, solidaire de l'extrémité libre 12a du deuxième élément de support. L'axe de rotation 14b de l'articulation élastique est quant-à-lui fixé à un étrier 14c solidaire de l'extrémité libre 11a de l'autre élément de support 11. On pourrait toutefois inverser les positions de l'étrier et de la douille. Dans l'exemple représenté, l'axe 14b de l'articulation 14 est parallèle à la direction transversale Y.

Dans ce mode de réalisation, l'articulation 14 est ainsi située au point d'intersection I des axes de rotation des bras tirés.

Comme dans l'autre mode de réalisation décrit en référence aux figures 3 et 4, l'articulation 14 peut être située au niveau du point d'intersection I des axes de rotation A1, A2 des bras tirés 1, 2 ou encore être située au dessus verticalement de ce point d'intersection. De manière similaire, à titre d'exemple, la position verticale de l'élément de liaison 14 par rapport au point d'intersection I peut ainsi être de 0 à 35mm, avantageusement de 0 à 15 mm ou dans tout intervalle défini par deux de ces limites.

On notera que le comportement du train arrière équipé de cette articulation centrale 14 est similaire au comportement du train arrière équipé d'une jumelle 13 décrit en référence à la figure 4.

La position des éléments de support 11, 12 à proximité des deuxièmes articulations 5B, 6B peut rendre difficile la réalisation de la douille recevant ces articulations et leur montage ainsi que des opérations de réglage, par exemple de réglage du parallélisme des roues. Il peut alors être avantageux de prévoir un système de fixation amovible reliant les éléments de support et l'élément de liaison. Ce système de fixation sera de préférence réglable, notamment suivant la direction longitudinale. On pourra par exemple prévoir un réglage longitudinal de +/-6mm.

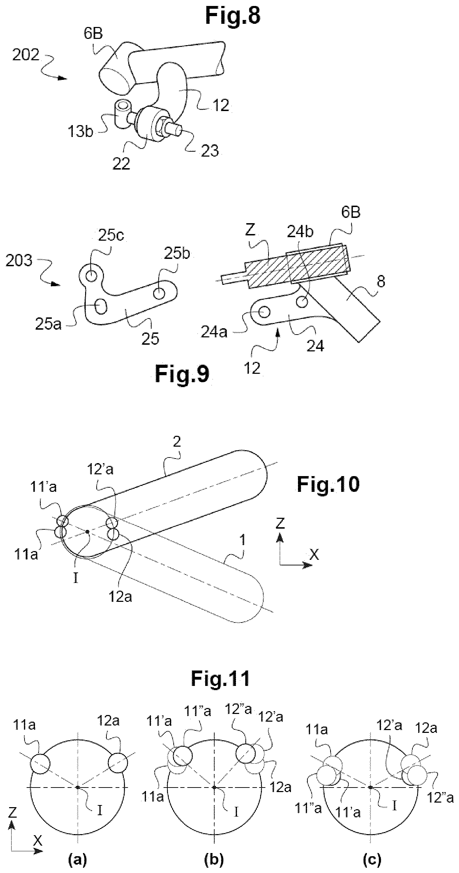

De manière générale, un système de fixation pourra comprendre au moins deux éléments de fixation, dont l'un est solidaire de l'élément de support ou du bras tiré (à proximité de sa deuxième articulation) et l'autre est solidaire d'un élément d'ancrage de l'élément de liaison. Ces éléments de fixation peuvent former tout ou partie de l'élément de support. Typiquement, l'un des éléments de fixation au moins est agencé de manière à, avant assemblage, ne pas gêner une opération de montage d'une deuxième articulation et/ou de fabrication du bras tiré. Autrement dit, cet élément de fixation n'est pas positionné à l'intérieur d'une zone de montage de cette deuxième articulation et/ou de fabrication du bras tiré. Une telle zone Z est représentée à titre d'exemple sur la figure 9.

Des exemples de systèmes de fixation sont décrits en référence aux figures 6 à 9.

La figure 6 représente un système de fixation 200 comprenant une première patte de fixation 20 percée de deux orifices 20a, 20b, formant une partie d'un élément de support 11 et une deuxième patte de fixation 21 également percée de deux orifices 21a, 21b et portant un élément d'ancrage de type étrier 14c pour recevoir l'axe 14b de l'articulation 14 représentée figure 5. Cette deuxième patte de fixation 21 forme une autre partie d'un élément de support 11. La première patte de fixation 20 s'étend en dehors d'une zone de montage de la deuxième articulation 5B et/ou de fabrication du bras tiré. Les orifices des deux pattes de fixation 20 et 21 correspondent lorsqu'elles sont superposées, permettant leur assemblage par des systèmes vis/écrous. On notera qu'à la place de l'étrier 14c, la deuxième patte de fixation 21 pourrait présenter en tant qu'élément d'ancrage la douille 14a ou encore un orifice pour recevoir une articulation de la jumelle représentée figure 3. Quel que soit le mode de réalisation, l'un des orifices de l'une des pattes de fixation peut présenter une forme oblongue afin de permettre un réglage, notamment suivant la direction longitudinale. Dans ce mode de réalisation, l'élément de support 11 est ainsi formé de l'assemblage des pattes de fixation 20, 21.

La figure 7 représente un système de fixation 201 comprenant une bague 22 présentant un orifice fileté 22a et une tige filetée 23 s'étendant suivant la direction longitudinale dont une extrémité est solidaire de la douille 14a de l'articulation 14 de la figure 5, cette douille formant un élément d'ancrage. La tige filetée 23 permet ainsi de régler la position de la douille 14a par rapport à la bague 22 et par conséquent à l'élément de support. La bague 22 est fixée à l'extrémité libre de l'élément de support 12, en dehors d'une zone de montage de la deuxième articulation 6B et/ou fabrication du bras tiré. En variante, la tige filetée 23 pourrait être solidaire de l'étrier 14c en tant qu'élément d'ancrage.

La figure 8 représente un système de fixation 202 similaire à celui de la figure 7, la tige filetée 23 portant à son extrémité l'une des articulations 13b de la jumelle 13 de la figure 3.

La figure 9 représente un mode de réalisation proche de celui décrit en référence à la figure 6. Ici, le système de fixation 203 comprend une première patte de fixation 24 percée de deux orifices 24a, 24b, formant une partie de l'élément de support 12 et une deuxième patte de fixation 25 également percée de deux orifices 25a, 25b et un troisième orifice 25c formant un élément d'ancrage et recevant l'une 13b des articulations de la jumelle 13 représentée figure 3. Cette deuxième patte de fixation forme l'autre partie de l'élément de support 12. Les orifices, 24a, 24b et 25a, 25b respectivement, correspondent lorsque les deux pattes de fixation 24 et 25 sont superposées, permettant leur assemblage par des systèmes vis/écrous. En outre, l'un des orifices 25a de la deuxième plaque 25 est de forme oblongue permettant un réglage de la position de cette deuxième patte par rapport à la première patte 24. Ici aussi, l'élément de support 12 est formé par l'assemblage des deux pattes 24, 25. La première patte de fixation 24 est en outre en dehors de la zone Z de montage de la deuxième articulation 6B et/ou de fabrication du bras tiré. En variante, la deuxième patte de fixation 25 pourrait comporter, en tant qu'élément d'ancrage une douille 14a ou un étrier 14c tel que précédemment décrit.

L'invention n'est pas limitée à un mode de réalisation particulier du système de fixation, pourvu qu'il permette un montage amovible de l'élément de liaison 13, 14. En outre, les différents systèmes de fixation décrits en référence aux figures 6 à 9 peuvent être combinés et mis en place indifféremment pour l'un ou les deux éléments de support du train arrière selon l'invention. On notera par ailleurs que la forme des éléments de support et des éléments de fixation décrits en référence aux figures et/ou leurs positions relatives ou leur position par rapport à l'élément de support, au bras tiré ou au bras oblique, peut être modifiée en fonction de l'environnement du train arrière et de la forme des bras tirés et obliques du train arrière.

Chaque bras tiré, et éventuellement le bras oblique associé, pourra être réalisé soit d'une pièce brute de fonderie, soit par soudage/ encastrement de différentes parties ou encore par caissonnage.

### Exemples

Les exemples 1 et 2 décrivent la cinématique d'un train arrière équipé d'une jumelle 13 dont la distance entre les axes de rotation est de 40mm. La longueur de chaque bras tiré est de 500mm.

Les exemples 3 et 4 décrivent l'impact cinématique en pompage et en roulis respectivement d'un train arrière équipé d'une articulation 14 décalée verticalement de 15mm. La longueur de chacun des bras tirés est également de 500mm.

### Exemple 1

La figure 10 montre le comportement de ce train arrière dans une situation de roulis de 5° (87,27mrad), dans laquelle le bras tiré droit 2 pivote vers le haut (vers le choc) de 7° et le bras tiré gauche 1 pivote vers le bas (vers le rebond) de 7° également (sur la figure, les cercles référencés 11a, 12a désignent la position des extrémités libres des éléments de support en absence de roulis, alors que les cercles référencés 11'a, 12'a désignent cette position en roulis de 5°). Ces rotations entraineraient, en l'absence de la jumelle 13, un rapprochement des extrémités libres des éléments de support servant de points d'ancrage de la jumelle 13 de deux fois 0,15 mm (position 11'a, 12'a), qui se traduit par le fait que chaque articulation de la jumelle 13, et par conséquent chaque deuxième articulation 5B, 6B, est forcée longitudinalement de 0,15mm. Ceci induit un braquage à droite (en virage à gauche ou à droite) de 0,15/500= 0,3mrad pour un bras tiré de 500mm de longueur, ce qui représente une augmentation du braquage induit sous-vireur de 0,34% par rapport à la situation de roulis de 5°. La présence de la jumelle 13 n'a ainsi quasiment pas d'impact sur le comportement en roulis du train arrière. On notera un braquage identique en roulis à gauche ou à droite.

### Exemple 2

Les figures 11 (a) à (c) montrent l'impact cinématique de la présence de la jumelle en roulis lorsque la jumelle est décalée verticalement de 15mm au dessus du point d'intersection I des axes d'articulation des bras tirés. Sur les figures, les cercles représentent symboliquement les extrémités libres 11a, 12a des éléments de support servant de points d'ancrage de la jumelle, vues selon l'axe transversal Y.

La figure 11(a) montre schématiquement sous forme de cercles les extrémités libres 11a, 12a dans une situation de roulage en ligne droite, les deuxièmes articulations étant non contraintes. Du fait de la position réhaussée des deuxièmes articulations, l'angle formé entre la droite passant par le point I et chaque extrémité 11a, 12a et l'horizontale est de 36,9°.

La figure 11(b) montre une situation de roulis véhicule à 5° (87,27mrad), en virage à gauche. Les bras tournent de 7,17° en sens opposé. En l'absence de jumelle, les extrémités libres des éléments de support servant de points d'ancrage de la jumelle se rapprocheraient de deux fois 2,00mm (cercles référencés 11"a et 12"a). Ils sont maintenus à distance constante par la jumelle (cercles référencés 11'a et 12'a) et contraignent chaque deuxième articulation d'environ 2mm (selon la géométrie locale) entrainant une rotation d'un bras tiré de 500mm de long de 2/500=4mrad, ce qui représente une augmentation du braquage induit sous-vireur de 4,6% par rapport à la situation de roulis de 5°.

La figure 11(c) montre une situation de roulis véhicule à 5°, en virage à droite. Les bras tournent de 7,17° en sens opposé. En l'absence de jumelle, les extrémités libres des éléments de support servant de points d'ancrage de la jumelle (cercles référencés 11"a et 12"a) s'écarteraient de deux fois 1,7mm. Ils sont maintenus à distance constante par la jumelle (cercles référencés 11'a et 12'a) et contraignent chaque deuxième articulation d'environ 1,7mm (selon la géométrie locale) entrainant une rotation d'un bras tiré de 500mm de long de 1,7/500=3,4mrad (11,7') ce qui constitue 3,9% du roulis. Autrement dit, dans cette situation, on augmente le braquage induit sous-vireur de 3,9%.

Ce comportement légèrement asymétrique des deux bras tirés est négligeable, cette configuration permettant un gain en braquage induit sous-vireur significatif (4,3% en moyenne).

On notera qu'il est préférable de prévoir des articulations élastiques (deuxièmes articulations) avec une course radiale longitudinale suffisante autour du point central afin de ne pas engendrer de contraintes anormales sur le train et bénéficier de l'effet escompté.

### Exemple 3

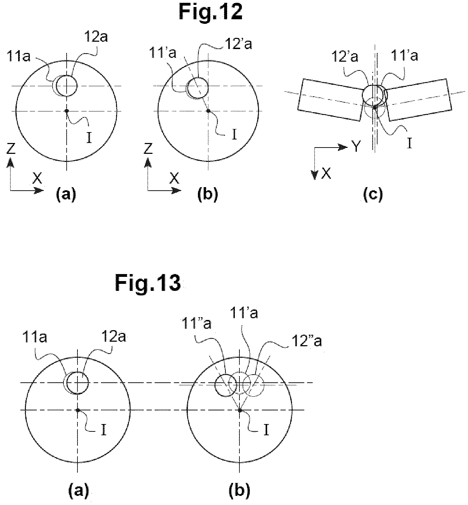

Les figures 12 (a) à (c) montrent l'impact cinématique en pompage.

La figure 12(a) montre une situation en ligne droite dans laquelle l'articulation 14 est non précontrainte et située 15mm au dessus de l'axe de rotation des bras tirés. Les cercles référencés 11a, 12a correspondent respectivement aux extrémités libres 11a, 12a.

La figure 12(b) montre une situation de pompage en choc (déplacement en Z de +100mm) entraînant une rotation des bras de 10,5° dans le même sens. La figure 12(c) est une vue de dessus de cette position. L'extrémité libre 12'a solidaire du bras tiré droit est décalée vers l'avant de 2,7 mm et décalée sur la gauche de 2,7mm forçant l'articulation centrale de 2,7 x sin10° =0,48mm (l'angle de 10° étant l'angle entre l'axe d'articulation A1 et l'axe transversal Y). L'extrémité libre 11'a solidaire du bras tiré gauche est décalée vers l'avant de 2,7 mm et décalée sur la droite de 2,7mm forçant l'articulation centrale de 2,7 x sin10° =0,48mm. Au global, l'articulation est ainsi forcée à se déformer latéralement de 0,48+0,48 mm soit d'environ 1mm, ce qui est acceptable.

### Exemple 4

La figure 13 (a) représente une situation en roulis dans laquelle l'articulation centrale est non contrainte. Les cercles référencés 11a, 12a correspondent respectivement aux extrémités libres 11a, 12a. La figure 13(b) représente une situation de roulis de 5° (virage à gauche). Les bras tournent de 7,17° en sens opposé. En l'absence d'articulation, les extrémités libres des éléments de support s'éloigneraient de deux fois 1,9mm (cercles référencés 11"a, 12"a). Ils sont maintenus à une distance nulle par l'articulation 14 (cercle référencé 11'a) et contraignent chaque deuxième articulation d'environ 1,9mm (selon la géométrie locale) entrainant une rotation d'un bras tiré de 500mm de long de 1,9/500=3,8mrad, ce qui représente une augmentation du braquage induit sous-vireur de 4,3% par rapport à la situation de roulis de 5°.

## Revendications

1. Train arrière (10) de véhicule automobile du type à deux bras tirés (1, 2) longitudinaux, dans lequel chaque bras tiré (1, 2) présente un support de fusée (3, 4) à une extrémité arrière et, à une extrémité avant opposée, un axe de rotation sensiblement transversal (A1, A2) défini par une première articulation et une deuxième articulation destinées à être reliées à la caisse du véhicule, les deuxièmes articulations (5B, 6B) étant situées entre les premières articulations transversalement, et les axes de rotation (A1, A2) des bras tirés étant sécants en un point d'intersection (I) appartenant à un plan médian transversalement du train arrière, ce plan s'étendant suivant les directions longitudinale et verticale, **caractérisé en ce que** :
- l'un (7) des bras tirés est solidaire, du côté de sa deuxième articulation, d'un premier élément de support (11) s'étendant vers l'avant du train arrière,
- l'autre (8) bras tiré est solidaire, du côté de sa deuxième articulation, d'un deuxième élément de support (12) s'étendant vers l'arrière du train arrière,
- des extrémités libres (11a, 12a) des premier et deuxième éléments de support sont situées dans le plan médian longitudinal et vertical du train arrière et sont reliées entre elles, et maintenues à une distance fixe suivant une direction sensiblement longitudinale, par un élément de liaison (13, 14) monté pivotant autour d'au moins un axe transversal à au moins l'une des extrémités libres des premier et deuxième éléments de support.

2. Train arrière (10) selon la revendication 1, **caractérisé en ce que** la distance fixe séparant les extrémités libres des premier et deuxième éléments de support est comprise dans un intervalle allant de zéro à une valeur seuil.

3. Train arrière (10) selon l'une quelconque des revendications 1 ou 2, **caractérisé en ce que** l'élément de liaison (13, 14) s'étend verticalement au dessus du point d'intersection (I) des axes de rotation des bras tirés, notamment à une distance non nulle, inférieure ou égale à une valeur seuil.

4. Train arrière (10) selon l'une quelconque des revendications 1 à 3, **caractérisé en ce que** l'élément de liaison (13) est une pièce allongée présentant deux extrémités distantes suivant la direction longitudinale, chacune des extrémités étant montée pivotante à l'une des extrémités libres des premier et deuxième éléments de support autour d'au moins un axe de rotation transversal.

5. Train arrière (10) selon la revendication 4, **caractérisé en ce que** les extrémités de la pièce allongée (13) sont articulées aux extrémités libres (11a, 12a) des premier et deuxième éléments de support par des articulations (13a, 13b) présentant au moins un axe de rotation transversal.

6. Train arrière (10) selon l'une quelconque des revendications 1 à 3, **caractérisé en ce que** l'élément de liaison (14) est une articulation présentant au moins un axe de rotation transversal, optionnellement une articulation élastique.

7. Train arrière (10) selon l'une quelconque des revendications 1 à 6, **caractérisé en ce qu'**un système de fixation amovible (200, 201, 202, 203), optionnellement réglable, notamment suivant la direction longitudinale, relie au moins un élément de support (11, 12) à l'élément de liaison (13, 14).

8. Train arrière (10) selon la revendication 7, **caractérisé en ce que** le système de fixation est choisi parmi :
- un premier élément de fixation (20, 24) solidaire d'un bras tiré à proximité de sa deuxième articulation ou d'un élément de support, un deuxième élément de fixation (21, 25) solidaire d'un élément d'ancrage de l'élément de liaison, les premier et deuxième éléments de fixation étant chacun percés de deux orifices (20a, 20b ; 21a, 21b ; 24a, 24b ; 25a, 25b) correspondants recevant des fixations de type vis-écrou, optionnellement au moins un orifice (25a) présentant une dimension supérieure à l'orifice avec lequel il coopère, notamment dans une direction de réglage,
- un premier élément de fixation solidaire d'un bras tiré à proximité de sa deuxième articulation ou d'un élément de support, un deuxième élément de fixation solidaire d'un élément d'ancrage de l'élément de liaison, le premier élément de fixation présentant un orifice fileté (22a), le deuxième élément de fixation présentant une tige filetée (23) s'étendant parallèlement à la direction longitudinale et coopérant avec l'orifice fileté.

9. Véhicule automobile équipé d'un train arrière (10) selon l'une quelconque des revendications 1 à 8.

## Patentansprüche

1. Hinterachse (10) eines Kraftfahrzeugs vom Typ mit zwei Längslenkern (1, 2), wobei jeder Lenker (1, 2) einen Achsschenkelträger (3, 4) an einem hinteren Ende und, an einem entgegengesetzten vorderen Ende, eine im Wesentlichen quer verlaufende Rotationsachse (A1, A2) aufweist, die durch ein erstes Gelenk und ein zweites Gelenk definiert wird, die dazu bestimmt sind, mit der Karosserie des Fahrzeugs verbunden zu sein, wobei die beiden Gelenke (5B, 6B) quer zwischen den ersten Gelenken gelegen sind, und wobei sich die Rotationsachsen (A1, A2) der Lenker in einem Schnittpunkt (I) schneiden, der zu einer quer verlaufenden Mittelebene der Hinterachse gehört, wobei sich diese Ebene entlang der längs und vertikal verlaufenden Richtungen erstreckt, **dadurch gekennzeichnet, dass**:
- der eine (7) der Lenker auf der Seite seines zweiten Gelenks fest mit einem ersten Trägerelement (11) verbunden ist, das sich zur Vorderseite der Hinterachse hin erstreckt,
- der andere (8) Lenker auf der Seite seines zweiten Gelenks fest mit einem zweiten Trägerelement (12) verbunden ist, das sich zur Rückseite der Hinterachse hin erstreckt,
- freie Enden (11a, 12a) der ersten und zweiten Trägerelemente in der längs und vertikal verlaufenden Mittelebene der Hinterachse gelegen sind und untereinander verbunden sind und in einem festen Abstand entlang einer im Wesentlichen längs verlaufenden Richtung durch ein Verbindungselement (13, 14) gehalten werden, das um mindestens eine quer zu mindestens einem der freien Enden der ersten und zweiten Trägerelemente verlaufende Achse schwenkbar montiert ist.

2. Hinterachse (10) nach Anspruch 1, **dadurch gekennzeichnet, dass** der feste Abstand, der die freien Enden der ersten und zweiten Trägerelemente trennt, in einem Intervall enthalten ist, das von null bis zu einem Schwellenwert reicht.

3. Hinterachse (10) nach einem der Ansprüche 1 oder 2, **dadurch gekennzeichnet, dass** sich das Verbindungselement (13, 14) vertikal über dem Schnittpunkt (I) der Rotationsachsen der Lenker erstreckt, insbesondere in einem Abstand ungleich null, kleiner oder gleich einem Schwellenwert.

4. Hinterachse (10) nach einem der Ansprüche 1 bis 3, **dadurch gekennzeichnet, dass** das Verbindungselement (13) ein langgestrecktes Teil ist, das zwei entlang der Längsrichtung beabstandete Enden aufweist, wobei jedes der Enden an einem der freien Enden der ersten und zweiten Trägerelemente um mindestens eine quer verlaufende Rotationsachse schwenkbar montiert ist.

5. Hinterachse (10) nach Anspruch 4, **dadurch gekennzeichnet, dass** die Enden des langgestreckten Teils (13) an die freien Enden (11a, 12a) der ersten und zweiten Trägerelemente durch Gelenke (13a, 13b) angelenkt sind, die mindestens eine quer verlaufende Rotationsachse aufweisen.

6. Hinterachse (10) nach einem der Ansprüche 1 bis 3, **dadurch gekennzeichnet, dass** das Verbindungselement (14) ein Gelenk ist, das mindestens eine quer verlaufende Rotationsachse aufweist, optional ein elastisches Gelenk.

7. Hinterachse (10) nach einem der Ansprüche 1 bis 6, **dadurch gekennzeichnet, dass** ein lösbares Befestigungssystem (200, 201, 202, 203), das optional einstellbar ist, insbesondere entlang der Längsrichtung, mindestens ein Trägerelement (11, 12) mit dem Verbindungselement (13, 14) verbindet.

8. Hinterachse (10) nach Anspruch 7, **dadurch gekennzeichnet, dass** das Befestigungssystem ausgewählt ist aus:
- einen ersten Befestigungselement (20, 24), das fest mit einem Lenker in der Nähe seines zweiten Gelenks oder eines Trägerelements verbunden ist, einem zweiten Befestigungselement (21, 25), das fest mit einem Verankerungselement des Verbindungselements verbunden ist, wobei die ersten und zweiten Befestigungselemente jeweils mit zwei übereinstimmenden Bohrungen (20a, 20b; 21a, 21b; 24a, 24b; 25a, 25b) durchbohrt sind, die Befestigungen vom Typ Schraube/Mutter aufnehmen, wobei optional mindestens eine Bohrung (25a) ein Maß aufweist, das größer als die Bohrung ist, mit der sie zusammenwirkt, insbesondere in eine Einstellrichtung,
- einem ersten Befestigungselement, das fest mit einem Lenker in der Nähe seines zweiten Gelenks oder eines Trägerelements verbunden ist, einem zweiten Befestigungselement, das fest mit einem Verankerungselement des Verbindungselements verbunden ist, wobei das erste Befestigungselement eine Gewindebohrung (22a) aufweist, wobei das zweite Befestigungselement einen Gewindestab (23) aufweist, der sich parallel zu der Längsrichtung erstreckt und mit der Gewindebohrung zusammenwirkt.

9. Kraftfahrzeug, das mit einer Hinterachse (10) nach einem der Ansprüche 1 bis 8 ausgestattet ist.

## Claims

1. Motor vehicle rear suspension (10) of the type having two longitudinal trailing arms (1, 2), wherein each trailing arm (1, 2) has a stub-axle carrier (3, 4) at one, rear, end and, at an opposite, front, end, a substantially transverse axis of rotation (A1, A2) defined by a first articulation and a second articulation which are intended to be connected to the body of the vehicle, the second articulations (5B, 6B) being situated transversely between the first articulations, and the axes of rotation (A1, A2) of the trailing arms being secant at a point of intersection (I) belonging to a transversely mid-plane of the rear suspension, this plane extending in the longitudinal and vertical directions, **characterized in that**:
- one (7) of the trailing arms is secured, at its second articulation, to a first support element (11) extending toward the front of the rear suspension,
- the other (8) trailing arm is secured, at its second articulation, to a second support element (12) extending toward the rear of the rear suspension,
- free ends (11a, 12a) of the first and second support elements are situated in the longitudinal and vertical midplane of the rear suspension and are connected to one another and held at a fixed distance apart in a substantially longitudinal direction by a connecting element (13, 14) that is pivotably mounted about at least one transverse axis at least at one of the free ends of the first and second support elements.

2. Rear suspension (10) according to Claim 1, **characterized in that** the fixed distance separating the free ends of the first and second support elements is comprised within an interval ranging from zero to a threshold value.

3. Rear suspension (10) according to either of Claims 1 and 2, **characterized in that** the connecting element (13, 14) extends vertically above the point of intersection (I) of the axes of rotation of the trailing arms, notably at a non-zero distance less than or equal to a threshold value.

4. Rear suspension (10) according to any one of Claims 1 to 3, **characterized in that** the connecting element (13) is an elongate component having two ends that are distant in the longitudinal direction, each of the ends being pivotably mounted at one of the free ends of the first and second support elements about at least one transverse axis of rotation.

5. Rear suspension (10) according to Claim 4, **characterized in that** the ends of the elongate component (13) are articulated to the free ends (11a, 12a) of the first and second support elements by articulations (13a, 13b) having at least one transverse axis of rotation.

6. Rear suspension (10) according to any one of Claims 1 to 3, **characterized in that** the connecting element (14) is an articulation having at least one transverse axis of rotation, optionally an elastic articulation.

7. Rear suspension (10) according to any one of Claims 1 to 6, **characterized in that** a removable fixing system (200, 201, 202, 203), optionally adjustable, notably in the longitudinal direction, connects at least one support element (11, 12) to the connecting element (13, 14).

8. Rear suspension (10) according to Claim 7, **characterized in that** the fixing system is selected from among:
- a first fixing element (20, 24) secured to a trailing arm near the second articulation thereof or a support element, a second fixing element (21, 25) secured to an anchoring element of the connecting element, the first and second fixing elements each being pierced with two corresponding orifices (20a, 20b; 21a, 21b; 24a, 24b; 25a, 25b) accepting fixings of the screw-nut type, optionally at least one orifice (25a) having a larger dimension than the orifice with which it collaborates, notably in an adjustment direction,
- a first fixing element secured to a trailing arm near the second articulation thereof or a support element, a second fixing element secured to an anchoring element of the connecting element, the first fixing element having a threaded orifice (22a), the second fixing element having a threaded rod (23) extending parallel to the longitudinal direction and engaging with the threaded orifice.

9. Motor vehicle equipped with a rear suspension (10) according to any one of Claims 1 to 8.
